(19) Europäisches Patentamt
European Patent Office
Office européen des brevets

(11) **EP 1 331 239 B1**

(12) **EUROPÄISCHE PATENTSCHRIFT**

(45) Veröffentlichungstag und Bekanntmachung des Hinweises auf die Patenterteilung:
**15.08.2007 Patentblatt 2007/33**

(51) Int Cl.:
*C08J 3/03* (2006.01)     *C09D 183/04* (2006.01)
*C04B 41/49* (2006.01)     *C08G 77/04* (2006.01)

(21) Anmeldenummer: **03000930.2**

(22) Anmeldetag: **16.01.2003**

(54) **Wasser-in-Öl-Cremes von Organo-Siliciumverbindungen**

Water in oil cream containing organosilicon compounds

Crème eau dans l'huile à base de composés organosiliciques

(84) Benannte Vertragsstaaten:
**BE DE FR IT NL SE**

(30) Priorität: **29.01.2002 DE 10203247**

(43) Veröffentlichungstag der Anmeldung:
**30.07.2003 Patentblatt 2003/31**

(73) Patentinhaber: **Goldschmidt GmbH
45127 Essen (DE)**

(72) Erfinder:
• **Schmuck, Manfred
  45289 Essen (DE)**
• **Sucker, Roland
  59368 Werne (DE)**

(56) Entgegenhaltungen:
**EP-A- 0 819 665          US-A- 4 990 377**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft kohlenwasserstofffreie wässrige Cremes von Orgaho-Siliciumverbindungen, deren Herstellung und Verwendung.

Seit vielen Jahren werden Organo-Siliciumverbindungen zur Imprägnierung anorganischer und organischer Baustoffe eingesetzt, um diese vor dem Eindringen von Wasser zu schützen. Diese Silane/Siloxane werden als solche, in Lösemittel gelöst oder in Form von Emulsionen angewendet. Wässrige hydrophile Emulsionen siliciumorganischer lösungsmittelfreier Verbindungen sind Stand der Technik und können als vollwertiger Ersatz lösemittelbasierender Systeme angesehen werden.

DE-A-199 45 305 betrifft eine Imprägniercreme zur Hydrophobierung von Baustoffen, bestehend aus einer Wasser-in-Öl-Emulsion aus hydrophobierenden Organosilicium-Verbindungen, einer wirkstofffreien Kohlenwasserstoffkomponente, Wasser, Emulgator sowie gegebenenfalls Hilfs- und Zuschlagstoffen. Die Cremes werden durch das Abmischen zweier cremeförmiger Halbprodukte hergestellt. Kohlenwasserstoffe umfassen insbesondere aliphatische und/oder entaromatisierte Benzinkohlenwasserstoffe, Benzinkohlenwasserstoffe im Bereich $C_9$ bis $C_{12}$ mit geringen Aromatenanteilen, isoparaffinische Kohlenwasserstoffe im Bereich $C_{11}$ bis $C_{15}$ sowie deren Gemische.

In EP-B-0 819 665 ist die Herstellung und Verwendung einer wässrigen standfesten Creme beschrieben, welche nach Applikation in den Baustoff eindringt und durch Rakeln und Spritzen auf die zu imprägnierenden Flächen aufgetragen werden kann. Die cremeartige Konsistenz beruht auf dem hohen Wirkstoffanteil von etwa 65 bis 90 Gew.-% in der Emulsion.

DE-C-40 29 640 beschreibt die Herstellung einer Emulsion mit niedriger Viskosität und niedrigerem Wirkstoffanteil als in der EP-B-0 819 665 beschrieben, die durch Rollen, Spritzen oder Fluten angewendet werden kann. Die Anwendungskonzentration dieser Art von Emulsionen liegt in der Regel bei 5 - 10 %.

Bei den beschriebenen Emulsionen handelt es sich um wasserverdünnbare Öl-in-Wasser-Systeme (O/W).

Diese wasserverdünnbaren Systeme haben jedoch einen entscheidenden Nachteil. Die Applikation wird sehr stark vom Wetter beeinflusst. Wenn es nach der Applikation zu regnen beginnt, wird das imprägnierte Material von der Fassade ab- oder aus dem oberflächennahen Bereich der Fassade herausgewaschen.

Das trifft vor allem bei Bautenschutzsystemen zu, welche eine cremige Konsistenz aufweisen und in entsprechend hoher Schichtdicke aufgetragen werden. Da bei solchen Systemen eine sofortige Penetration der Oberfläche nicht erfolgt, bleibt die Creme erst einmal vor endgültiger Absorption auf der Baustoffoberfläche, so dass durch Regen diese Schicht mehr oder weniger komplett abgewaschen werden und in den Boden gelangen kann, was ökologisch und ökonomisch bedenklich ist. Ein solcher Vorgang bedarf einer zweiten Applikation.

Auch Bautenschutzemulsionen mit niedrigem Wirkstoffgehalt und entsprechend niedriger Viskosität werden nach Applikation durch Regen oberflächlich ausgewaschen. Gerade im oberflächennahen Bereich, wo sich der wasserabweisende Wirkstoff befinden sollte, muss nach Regenfällen nachimprägniert werden.

Dong Hwang et al, Journal of the Korean Ceramic Society, Band 37, Nr. 8, S. 760 bis 767, 2000 beschreibt die Emulgierung von Silanen als Hydrophobierungsmittel für Beton. Hier wird beschrieben, dass Emulsionen von Silanen, die Verwendung von O/W- und W/O-Emulgatoren erfordern, die mit Hilfe von Polyvinylalkohol (PVA) stabilisiert werden.

Der Erfindung lag die Aufgabe zugrunde, ein umweltverträgliches System zu finden, welches einerseits gut in einen mineralischen oder organischen Baustoff eindringt und andererseits sofort nach Applikation regenfest ist und nicht abgewaschen wird. Weiterhin ist eine cremeartige Konsistenz erwünscht, um das Ablaufen von senkrecht und über Kopf zu imprägnierenden Flächen zu vermeiden. Cremeartige Emulsionen haben außerdem den Vorteil, dass sie bei Sprühapplikation keine schädigenden Aerosole bilden. Cremes können u.a. durch Rollen auf die zu imprägnierenden Flächen aufgetragen werden, so dass ein Abdecken z. B. von Fenstern entfällt.

Überraschenderweise wurde gefunden, dass kohlenwasserstofffreie W/O-Emulsionen aus Silanen und/oder Polysiloxanen diese Anforderungen erfüllen. Diese Form der Emulsionen ist sofort nach Applikation regenfest.

Gegenstand der Erfindung sind in einer ersten Ausführungsform kohlenwasserstofffreie Wasser-in-Öl-Cremes von Organo-Siliciumverbindungen, welche die Komponenten

(A) eines oder mehrere $C_1$-$C_{20}$-Alkyl-$C_1$-$C_6$-alkoxysilane (A1) und/oder Alkoxygruppen enthaltende Organopolysiloxane (A2) und/oder Organopolysiloxane (A3), die zusätzlich zu anderen Organosiloxaneinheiten solche Siloxaneinheiten aufweisen, die über Si-C-gebundene Reste mit basischem Stickstoff aufweisen, mit der Maßgabe, dass die Aminzahl des Organopolysiloxans mindestens 0,01 beträgt,
(B) einen oder mehrere Emulgatoren und
(C) Wasser

enthalten.

Ein Vorteil dieser erfindungsgemäßen Emulsionen ist, dass sie nicht den unwirtschaftlichen hohen Feststoffanteil benötigen, um eine cremeartige Konsistenz aufzuweisen. Ein Eindringen der erfindungsgemäßen Emulsionen bedingt aufgrund der Freiheit von Kohlenwasserstoffen keine Schädigungen der Umwelt.

Als Creme werden pastöse, wasserhaltige Zubereitungen bezeichnet, die Emulsionssysteme aus Wirkstoff, Wasser und Emulgatoren sind.

Die erfindungsgemäßen wässrigen Cremes dringen vollständig in den Baustoff ein. Dadurch stellt sich schnell ein Abperleffekt nach Applikation ein. Die wässrigen Cremes sind praktisch lösemittelfrei. Vorzugsweise enthalten die Cremes keine organischen Lösungsmittel, wie Kohlenwasserstoffe.

Die wässrigen Cremes sind vorzugsweise standfeste streichbare, spritzbare, roll- und rakelbare vorzugsweise farblose Beschichtungen von cremiger Konsistenz.

Die Standfestigkeit der Creme wird wie folgt definiert:

Auf eine senkrechte Beton- oder Kalksandsteinfläche wird die Creme mit einer Auftragsstärke von 1 mm durch Spritzen oder Rakeln aufgebracht. Als Standfestigkeit wird definiert, dass diese Creme nach der Applikation nicht mehr als 5 cm, vorzugsweise nicht mehr als 1 cm, besonders bevorzugt gar nicht nach unten absinken darf, bevor sie vom Untergrund völlig absorbiert worden ist.

Vorzugsweise besitzen die $C_1$-$C_{20}$-Alkyl-$C_1$-$C_6$-alkoxysilane (A1) 1 oder 2 gleiche oder verschiedene, gegebenenfalls halogensubstituierte, über SiC-gebundene einwertige $C_1$-$C_{20}$-Alkylreste und die übrigen Reste sind gleiche oder verschiedene $C_2$-$C_6$-Alkoxyreste.

Beispiele für die $C_1$-$C_{20}$-Alkylreste, sind der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest und Dodecylreste, wie der n-Dodecylrest; Cycloalkylreste, wie Cyclopentyl-, Cyclohexyl-, 4-Ethylcyclohexyl-, Cycloheptylreste, Norbornylreste und Methylcyclohexylreste.

Beispiele für halogensubstituierte $C_1$-$C_{20}$-Alkylreste sind mit Fluor-, Chlor-, Brom- und Jodatomen substituierte Alkylreste, wie der 3,3,3-Trifluor-n-propylrest, der 2,2,2',2',2'-Hexafluorisopropylrest und der Heptafluorisopropylrest.

Besonders bevorzugt sind die nicht substituierten $C_1$-$C_{12}$-Alkylreste.

Beispiele für $C_1$-$C_6$-Alkoxyreste sind der Methoxy-, Ethoxy-, n-Propoxy-, Isopropoxy-, n-Butoxy-, iso-Butoxy-, sec.-Butoxy-, tert.-Butoxy-rest; Pentyloxyreste, wie der n-Pentyloxyrest und Hexyloxyreste, wie der n-Hexyloxyrest. Die Ethoxyreste sind besonders bevorzugt.

Die Alkoxyreste können mit Halogenatomen substituiert sein, doch ist dies nicht bevorzugt.

Die wässrige Creme kann ein Alkoxygruppen enthaltendes Organopolysiloxan (A2) oder ein Gemisch mehrerer Organopolysiloxane enthalten. Die Organopolysiloxane (A2) können zusätzlich Hydroxylgruppen enthalten, die eine Bindung an die Baustoffe erleichtern.

Die Organopolysiloxane (A2) weisen vorzugsweise eine Viskosität von beispielsweise 2000 mPa·s auf, um eine besonders gute Verteilung auf den Porenoberflächen im Mauerwerk zu erreichen. Es können auch höherviskose Organopolysiloxane (A2), bis hin zu Festharzen beispielsweise Methylsiliconfestharze mit einer Molmasse von 2000 bis 10000 g/mol mit beispielsweise einem Glasübergangstemperaturbereich von 40-50 °C eingesetzt werden. Diese müssen allerdings vor Herstellung der erfindungsgemäßen Creme in den Silanen gelöst werden.

Besonders geeignet sind die Organopolysiloxane (A2) aus Einheiten der allgemeinen Formel (I)

$$R_x Si(OR^1)_y Si(OH)_z O_{\frac{4-x-y-z}{2}} \qquad\qquad (I)$$

in der

R     gleiche oder verschiedene einwertige, gegebenenfalls halogensubstituierte, über SiC-gebundene $C_1$-$C_{20}$-Kohlenwasserstoffreste,

$R^1$     gleiche oder verschiedene einwertige $C_1$-$C_6$-Alkylreste,

x     0, 1, 2 oder 3, durchschnittlich 0,8 bis 1,8,

y     0,1, 2, oder 3, durchschnittlich 0,01 bis 2,0 und

z     0, 1, 2 oder 3, durchschnittlich 0,0 bis 0,5 bedeuten, mit der Maßgabe, dass die Summe von x, y und z höchstens 3,5 beträgt.

Vorzugsweise besitzt das Organopolysiloxan (A2) eine Viskosität von 10 mPa·s bis 50000 mPa·s, insbesondere 50 mPa·s bis 5000 mPa·s bei 25 °C.

Beispiele für die $C_1$-$C_{20}$-Kohlenwasserstoffreste sind die vorstehend bei den Organoalkoxysilanen aufgeführten

$C_1$-$C_{20}$-Alkylreste und halogensubstituierten $C_1$-$C_{20}$-Alkylreste, die Alkenylreste, wie der Vinyl-, Allyl, n-5-Hexenyl-, 4-Vinylcyclohexyl- und der 3-Norbornenylrest; Arylreste, wie der Phenyl-, Biphenylyl-, Naphthyl-, Anthryl- und Phenanthrylrest; Alkarylreste, wie o-, m-, p-Tolylreste, Xylylreste und Ethylphenylreste; Aralkylreste, wie der Benzylrest, der alpha- und der β-Phenylethylrest. Besonders bevorzugt sind die nicht substituierten $C_1$-$C_{12}$-Alkylreste und der Phenylrest.

Obwohl in der vorstehend aufgeführten Formel nicht aufgeführt, kann ein Teil der Reste R durch direkt an Siliciumatome gebundene Wasserstoffatome ersetzt sein. Dies ist jedoch nicht bevorzugt.

Beispiele für die Reste $R^1$ sind der Methyl-, Ethyl-, n-Propyl-, Isopropyl-, n-Butyl-, sec.-Butyl-, und tert.-Butylrest; Pentylreste, wie der n-Pentylrest und Hexylreste, wie der n-Hexylrest, wobei die Ethylreste besonders bevorzugt sind.

Vorzugsweise hat x einen durchschnittlichen Wert von 0,9 bis 1,1. Vorzugsweise hat y einen durchschnittlichen Wert von 0,4 bis 1,2. Vorzugsweise hat z einen durchschnittlichen Wert von 0,0 bis 0,2.

Beispiele für Organosiloxane (A2) sind solche, die durch Umsetzung von Methyltrichlorsilan und gegebenenfalls einem $C_1$-$C_8$-Alkyltrichlorsilan, oder Phenyltrichlorsilan mit Ethanol in Wasser erhältlich sind, wie die Organopolysiloxane der Summenformeln

$$CH_3Si(OC_2H_5)_{0,8}O_{1,1} \text{ oder}$$

$$C_6H_5Si(OC_2H_5)_{0,72}O_{1,14}.$$

Die gegebenenfalls zusätzlich zu Komponente (A2) eingesetzten Organopolysiloxane (A3) sind vorzugsweise solche aus Einheiten der allgemeinen Formel (II)

$$R^2_a R^3_b (OR^4)_c SiO_{\frac{4-a-b-c}{2}} \qquad (II)$$

in der

$R^2$     gleiche oder verschiedene einwertige, von basischem Stickstoff freie, gegebenenfalls halogensubstituierte, SiC-gebundene $C_1$-$C_{20}$-Kohlenwasserstoffreste bedeutet,

$R^3$     gleiche oder verschiedene einwertige, gegebenenfalls halogensubstituierte, SiC-gebundene basischen Stickstoff aufweisende $C_1$-$C_{30}$-Kohlenwasserstoffreste bedeutet,

$R^4$     gleich oder verschieden sein kann und Wasserstoffatom oder $C_1$-$C_6$-Alkylreste bedeutet,

a     0, 1, 2 oder 3,

b     0, 1, 2 oder 3, durchschnittlich mindestens 0,05 und

c     0, 1, 2 oder 3 ist,

mit der Maßgabe, dass die Summe aus a, b und c kleiner oder gleich 3 ist und dass die Aminzahl des Organopolysiloxans (A3) mindestens 0,01 beträgt.

Die Aminzahl bezeichnet die Anzahl der ml In HCl, die zum Neutralisieren von 1 g Organopolysiloxan (A3) erforderlich sind. Die Aminzahl des Organopolysiloxans (A3) beträgt vorzugsweise mindestens 0,1, insbesondere mindestens 0,2, und vorzugsweise höchstens 8, insbesondere höchstens 4.

Beispiele und bevorzugte Beispiele für den Rest $R^2$ sind vorstehend bei Rest R aufgeführt. Insbesondere sind der Methyl- und der Isooctylrest bevorzugt.

Vorzugsweise ist an jedes Siliciumatom, an das ein Wasserstoffatom gebunden ist, auch ein Kohlenwasserstoffrest, insbesondere ein Methylrest, gebunden.

Bevorzugt handelt es sich bei Rest $R^3$ um einen Rest der allgemeinen Formel (III)

$$R^5_2 NR^6 - \qquad (III),$$

worin

$R^5$ gleich oder verschieden sein kann und Wasserstoff oder einwertiger, gegebenenfalls substituierter $C_1$-$C_{10}$-Kohlenwasserstoffrest oder $C_1$-$C_{10}$-Aminokohlenwasserstoffrest und $R^6$ einen zweiwertigen $C_1$-$C_{15}$-Kohlenwasserstoffrest bedeuten.

Beispiele für den Rest $R^5$ sind die für Rest R gegebenen Beispiele für Kohlenwasserstoffreste sowie mit Aminogruppen substituierte Kohlenwasserstoffreste, wie Aminoalkylreste, wobei der Aminoethylrest besonders bevorzugt ist.

Vorzugsweise ist an jedes Stickstoffatom in den Resten der allgemeinen Formel (III) mindestens ein Wasserstoffatom gebunden.

Bevorzugt handelt es sich bei Rest $R^6$ um zweiwertige Kohlenwasserstoffreste mit 1 bis 10 Kohlenstoffatomen, besonders bevorzugt 1 bis 4 Kohlenstoffatomen, insbesondere um den n-Propylenrest.

Beispiele für Rest $R^6$ sind der Methylen-, Ethylen-, Propylen-, Butylen-, Cyclohexylen-, Octadecylen-, Phenylen- und Butenylenrest.

Bevorzugte Beispiele für Reste $R^3$ sind

$H_2N(CH_2)_3$-,
$H_2N(CH_2)_2NH(CH_2)_2$-,
$H_2N(CH_2)_2NH(CH_2)_3$-,
$H_2N(CH_2)_2$-,
$H_3CNH(CH_2)_3$-,
$C_2H_5NH(CH_2)_3$-,
$H_3CNH(CH_2)_2$-,
$C_2H_5NH(CH_2)_2$-,
$H_2N(CH_2)_4$-,
$H_2N(CH_2)_5$-,
$H(NHCH_2CH_2)_3$-,
$C_4H_9NH(CH_2)_2NH(CH_2)_2$-,
cyclo-$C_6H_{11}NH(CH_2)_3$-,
cyclo-$C_6H_{11}NH(CH_2)_2$-,
$(CH_3)_2N(CH_2)_3$-,
$(CH_3)_2N(CH_2)_2$-,
$(C_2H_5)_2N(CH_2)_3$- und
$(C_2H_5)_2N(CH_2)_2$-.

Die Beispiele für Alkylreste $R^1$ gelten im vollen Umfang auch für den Rest $R^6$.

Beispiele und bevorzugte Beispiele für den Rest $R^4$ sind vorstehend bei Rest $R^1$ aufgeführt. Insbesondere sind der Methyl- und der Ethylrest bevorzugt.

Der bevorzugte durchschnittliche Wert für a ist 0 bis 2, insbesondere 0 bis 1,8.

Der bevorzugte durchschnittliche Wert für b ist 0,1 bis 0,6, insbesondere 0,15 bis 0,30.

Der bevorzugte durchschnittliche Wert für c ist 0 bis 0,8, insbesondere 0,01 bis 0,6.

Vorzugsweise haben die Organopolysiloxane (A3) eine Viskosität von 5 bis 5000, insbesondere von 100 bis 3000 mPa·s bei 25 °C.

Organopolysiloxane (A3) können in bekannter Weise, beispielsweise durch Äquilibrieren bzw. Kondensieren von aminofunktionellen Silanen mit Organopolysiloxanen (A2), die Alkoxygruppen und/oder Hydroxylgruppen enthalten und die frei von basischem Stickstoff sind, hergestellt werden.

Die erfindungsgemäßen Cremes können zur Verbesserung des Abperleffektes hydrophobe Feststoffe mit großer Oberfläche enthalten, wie sie beispielsweise aus DE-A-39 11 479 bekannt sind.

Besonders bevorzugt im Sinne der vorliegenden Erfindung enthalten die Cremes $C_1$-$C_{20}$-Alkyl-$C_1$-$C_6$-alkoxysilane (A1) in einer Menge von 5 bis 100 Gew.-%, bezogen auf die Gesamt-Wirkstoffmenge (A) aus (A1)und/oder (A2) und/oder (A3).

In gleicher Weise bevorzugt ist es erfindungsgemäß, dass die Organopolysiloxane (A2) in einer Menge von 5 bis 100 Gew.-%, bezogen auf die Gesamt-Wirkstoffmenge (A) enthalten sind.

In gleicher Weise ist es erfindungsgemäß besonders bevorzugt, dass die Organopolysiloxane (A3), die zusätzlich zu anderen Organosiloxaneinheiten Siloxaneinheiten mit basischem Stickstoff aufweisen, in einer Menge von 5 bis 100 Gew.-%, bezogen auf die Gesamt-Wirkstoffmenge (A) enthalten sind.

Die wässrigen Cremes enthalten wenigstens einen an sich bekannten Emulgator.

Die Menge der Emulgatoren richtet sich nach den gewünschten Erfordernissen. Besonders bevorzugt im Sinne der vorliegenden Erfindung enthalten die Cremes die Emulgatoren in einer Menge von 1 bis 40 Gew.-%, bevorzugt 5 bis 20 Gew.-% bezogen auf die Gesamt-Wirkstoffmenge (A).

Es hat sich gezeigt, dass es möglich ist, unter Verwendung von geeigneten W/O-Emulgatoren pastöse Emulsionen mit Wirkstoffgehalten von 5 bis 50 Gew.-%, bevorzugt 20 bis 40 Gew.-%, einzustellen. Geeignete W/O-Emulgatoren weisen in der Regel einen HLB von 2 bis 5 auf wie sie in folgenden Stoffklassen zu finden sind: Sorbitanester, Fettalkoholethoxylate, Lanolinderivate, Fettsäureester, Glucoseester, Emulgatoren auf Basis von Polyglycerin oder Pentaerythrit und auch Organosiloxane wie z. B. Cetyl Dimethicone Copolyol.

Die erfindungsgemäßen Wasser-in-Öl-Cremes können nach an sich bekannten Verfahren des Standes der Technik hergestellt werden.

Die Auftragsstärke der erfindungsgemäßen Hydrophobierungscreme beträgt vorzugsweise 0,1 mm bis 3 mm, insbesondere 0,2 mm bis 1,5 mm, besonders bevorzugt 0,3 mm bis 1,1 mm.

Die wässrigen Cremes eignen sich weiterhin zur Hydrophobierung von mineralischen Baustoffen, insbesondere zur nachträglichen hydrophobierenden Imprägnierung von Natur- oder Kunststein, Sichtmauerwerken, Beton, Zement, Kalksandstein und Porenbeton, Baustoffen aus Tonmineralien, wie Ziegel, als Hydrophobierungs- und gegebenenfalls als Bindemittel wirkender Zusatz zu Gips, Verputzen und in Bautenbeschichtungen, wie Mineralfarben, Siliconharzemulsionsfarben und -putzen, Dispersionssilikatfarben, Dispersionsfarben, Streichfüllern, Armierungsmassen und Grundierungen. Insbesondere wird die Frühregenfestigkeit bei Bautenbeschichtungsmitteln verbessert. Die wässrigen Cremes eignen sich somit auch für die Behandlung von organischen Baustoffen wie Holz.

Die wässrigen Cremes sind auch geeignet zur Hydrophobierung von feinteiligen anorganischen Stoffen, wie Perlit, Vermiculit und Wärmedämmstoffen.

Ausführungsbeispiele:

Beispiel 1:

In einem 2-1-Becherglas wurden 150 g Octyltriethoxysilan und 15 g Cetyl-Dimethicone-Polyol vorgelegt und 835 ml Wasser unter Rühren mit einer Dissolverscheibe zugesetzt. Die Zugabezeit betrug 10 Minuten.

Es hatte sich eine stabile Creme gebildet.

Beispiel 2:

In einem Becherglas gleicher Größe wie in Beispiel 1 wurden 250 g einer Mischung bestehend aus 60 % Octyltriethoxysilan und 40 % eines Umsetzungsproduktes aus 93 g $\alpha,\omega$-Polysiloxandiol und 7 g $\gamma$-Aminopropyltriethoxy- silan (siehe DE-C-40 29 640) und 25 g Emulgator (Cetyl-Dimethicone-Polyol) vorgelegt und 725 g Wasser zugetropft. Als Emulgieraggregat wurde ein Ultraturrax verwendet.

Es bildete sich eine stabile Creme.

Beispiel 3:

In einem Becherglas gleicher Größe wie Beispiel 1 wurde 200 g eines Organopolysiloxans in Form eines Kondensationsprodukts aus einem in den endständigen Einheiten je eine Si-gebundene Hydroxylgruppe aufweisenden $\alpha,\omega$-Dihydroxymethylpolysiloxans und N(-2-Aminoethyl)-3-aminopropyltrimethoxysilan in Gegenwart von KOH mit einer Aminzahl von etwa 0,3, einer Viskosität von etwa 1500 mm$^2$/s Bei 25 °C und einem Restmethoxygehalt von weniger als 5 Mol.-%, bezogen auf die anfangs im N(-2-Aminoethyl)-3-aminopropyltrimethoxysilan vorhandenen Methoxygruppen. Die Aminzahl des Polysiloxans betrug mindestens 0,01 und 20 g Emulgator (Sorbitanmonooleat) vorgelegt und 780 g Wasser unter Zuhilfenahme einer Mizerscheibe einemulgiert. Die Wasserzugabe hatte 20 Minuten gedauert. Es hatte sich eine stabile Creme gebildet.

Anwendungstechnische Prüfungen:

A) Ein Kalksandstein mit den Maßen 7 cm x 5 cm x 2 cm wurde allseitig im Labor mit der in Beispiel 2 beschriebenen Creme beschichtet. Der Auftrag betrug 160 g/m$^2$, was 40 g/m$^2$ an Wirkstoff entsprach. Sofort nach Beschichtung wurde der Kalksandstein einer künstlichen Beregnung unterworfen. Es wurde festgestellt, dass während der ca. 50-minütigen Penetrationszeit der Creme bzw. der Wirkstoff daraus das Wasser der Beregnung auf der Oberfläche abperlte ohne auch nur geringste Mengen der Creme abzuwaschen. Selbst nachdem der Wirkstoff der Creme vollständig aufgesaugt worden war, perlte das Wasser noch ab.

Nach abgeschlossener Beregnung wurde der Stein 14 Tage bei Raumtemperatur gelagert und die Wasseraufnahme nach DIN 52103 bestimmt.

| | |
|---|---|
| Unbehandelter Kalksandstein | 12,7 % |
| Behandelter Kalksandstein: | 0,9 % |
| Reduzierung der Wasseraufnahme: | 93 % |

B) Ein Betonwürfel mit der Kantenlänge 6 cm x 6 cm x 6 cm wurde allseitig mit der in Beispiel 1 beschriebenen Creme imprägniert. Der Auftrag an Creme betrug 300 g/m$^2$, was einer Wirkstoffmenge von 45 g/m$^2$ entsprach. Während der 60-minütigen Penetrationszeit wurde der beschichtete Betonwürfel künstlich beregnet. Es erfolgte kein Ablösen der Beschichtung.

Nach 14 Tagen Lagerung bei Raumtemperatur wurde die Reduzierung der Wasseraufnahme nach DIN 52103 bestimmt.

| | |
|---|---|
| Betonwürfel nicht imprägniert | 6 % Wasseraufnahme |
| Betonwürfel imprägniert | 0,6 % Wasseraufnahme |
| Reduzierung der Wasseraufnahme | 90 % |

C) Ein Holzwürfel mit der Kantenlänge 5 cm x 7 cm x 2 cm wurde mit der Creme aus dem Beispiel 3 beschichtet. Der Auftrag betrug 100 g/m$^2$, was einer Wirkstoffmenge von 25 g/m$^2$ entsprach. Die anschließend durchgeführte künstliche Beregnung löste keine Emulsion ab.
Nach 14 Tagen Lagerung bei Raumtemperatur wurde die Wasseraufnahme nach ASTM D 5401 bestimmt.

Reduzierung der Wasseraufnahme    84 %

Vergleichsbeispiel:

Gemäß DE-199 45 305, Beispiel 1 wurde eine Imprägniercreme hergestellt. Bezogen auf die Gesamtzusammensetzung werden 40 Gew.-% eines isoparaffinischen Kohlenwasserstoffgemisches mit einem Siedebereich von 185 bis 213 °C und einem Flammpunkt von mehr als 60 °C und 40 Gew.-% eines Alkylalkoxysilan- und -siloxan-Gemisches im Verhältnis 1 : 1 zusammengegeben und homogenisiert. Anschließend wurden portionsweise 19,3 Gew.-% Wasser und 0,7 Gew.-% Emulgator Marlipal® hinzugegeben und in üblicher Weise emulgiert, bis eine cremeförmige Konsistenz erreicht ist. Die Inertcreme war damit applikationsfertig.
Der Emulgator Marlipal® enthielt 9 EO-Einheiten (HLB-Wert=13,7). Nach dem Auftragen auf einen mineralischen Untergrund ließ sich die Creme einwandfrei mit Wasser (Regen) abspülen. Es handelte sich eindeutig um eine O/W-Emulsion.

**Patentansprüche**

1.  Kohlenwasserstofffreie Wasser-in-Öl-Cremes von Organo-Siliciumverbindungen, welche die Komponenten

    (A) eines oder mehrere $C_1$-$C_{20}$-Alkyl-$C_1$-$C_6$-alkoxysilane (A1), und/oder Alkoxygruppen enthaltende Organopolysiloxane (A2) und/oder Organopolysiloxane (A3), die zusätzlich zu anderen Organosiloxaneinheiten solche Siloxaneinheiten aufweisen, die über Si-C-gebundene Reste mit basischem Stickstoff aufweisen, mit der Maßgabe, dass die Aminzahl des Organopolysiloxans mindestens 0,01 beträgt,
    (B) einen oder mehrere Emulgatoren und
    (C) Wasser

    enthalten.

2.  Cremes nach Anspruch 1, **dadurch gekennzeichnet, dass** die $C_2$-$C_{20}$-Alkyl-$C_2$-$C_6$-alkoxysilane (A1) 1 oder 2 gleiche oder verschiedene, gegebenenfalls halogensubstituierte, über SiC-gebundene einwertige $C_1$-$C_{20}$-Alkylreste aufweisen und die weiteren Reste gleiche oder verschiedene $C_2$-$C_6$-Alkoxyreste sind.

3.  Cremes nach Anspruch 1 oder 2, **dadurch gekennzeichnet, dass** die $C_1$-$C_{20}$-Alkyl-$C_1$-$C_6$-alkoxysilane (A1) in einer Menge von 5 bis 100 Gew.-%, bezogen auf die Gesamt-Wirkstoffmenge (A), enthalten sind.

4.  Cremes nach einem der Ansprüche 1 bis 3, **dadurch gekennzeichnet, dass** die Alkoxygruppen enthaltende Organopolysiloxane (A2) aus Einheiten der allgemeinen Formel (I)

$$R_x Si(OR^1)_y Si(OH)_z O_{\frac{4-x-y-z}{2}} \qquad (I)$$

    bestehen, in der

R gleiche oder verschiedene einwertige, gegebenenfalls halogensubstituierte, über SiC-gebundene $C_1$-$C_{20}$-Kohlenwasserstoffreste,

$R^1$ gleiche oder verschiedene einwertige $C_1$-$C_6$-Alkylreste,

x 0, 1, 2 oder 3, durchschnittlich 0,8 bis 1,8,

y 0, 1, 2 oder 3, durchschnittlich 0,01 bis 2,0 und

z 0, 1, 2 oder 3, durchschnittlich 0,0 bis 0,5 bedeuten, mit der Maßgabe, dass die Summe von x, y und z höchstens 3,5 beträgt.

**5.** Cremes nach einem der Ansprüche 1 bis 4, **dadurch gekennzeichnet, dass** die Alkoxygruppen enthaltende Organopolysiloxane (A2) in einer Menge von 5 bis 100 Gew. %, bezogen auf die Wirkstoffmenge (A), enthalten sind.

**6.** Cremes nach einem der Ansprüche 1 bis 5, **dadurch gekennzeichnet, dass** die Organopolysiloxane (A3), die zusätzlich zu anderen Organosiloxaneinheiten Siloxaneinheiten aufweisen aus Einheiten der allgemeinen Formel (II)

$$R^2_a R^3_b (OR^4)_c SiO_{\frac{4-a-b-c}{2}} \qquad (II)$$

aufgebaut sind, in der

$R^2$ gleiche oder verschiedene einwertige, von basischem Stickstoff freie, gegebenenfalls halogensubstituierte, SiC-gebundene $C_1$-$C_{20}$-Kohlenwasserstoffreste bedeutet,

$R^3$ gleiche oder verschiedene einwertige, gegebenenfalls halogensubstituierte, SiC-gebundene basischen Stickstoff aufweisende $C_1$-$C_{30}$-Kohlenwasserstoffreste bedeutet,

$R^4$ gleich oder verschieden sein kann und Wasserstoffatom oder $C_1$-$C_6$-Alkylreste bedeutet,

a 0, 1, 2 oder 3,

b 0, 1, 2 oder 3, durchschnittlich mindestens 0,05 und

c 0, 1, 2 oder 3 ist,

mit der Maßgabe, dass die Summe aus a, b und c kleiner oder gleich 3 ist.

**7.** Cremes nach einem der Ansprüche 1 bis 6, **dadurch gekennzeichnet, dass** die Organopolysiloxane (A3), die zusätzlich zu anderen Organosiloxaneinheiten Siloxaneinheiten mit basischem Sticklstoff aufweisen in einer Menge von 5 bis 100 Gew.-%, bezogen auf die Gesamt-Wirkstoffmenge (A), enthalten sind.

**8.** Cremes nach einem der Ansprüche 1 bis 7, **dadurch gekennzeichnet, dass** die Emulgatoren (B) einen HLB-Wert von 2 bis 5 aufweisen.

**9.** Cremes nach einem der Ansprüche 1 bis 8, **dadurch gekennzeichnet, dass** die Emulgatoren (B) ausgewählt sind aus Sorbitanestern, Fettalkoholethoxylaten, Lanolinderivaten, Fettsäureestern, Glucoseestern, Emulgatoren auf der Basis von Polyglycerin oder Pentaerythrit einschließlich Organosiloxanen, insbesondere Cetyl Dimethicone Copolyol.

**10.** Cremes nach einem der Ansprüche 1 bis 9, **dadurch gekennzeichnet, dass** die Emulgatoren (B) in einer Menge von 1 bis 40 Gew.-%, insbesondere 5 bis 20 Gew.-% bezogen auf die Gesamt-Wirkstoffmenge (A1), (A2) und/oder (A3) enthalten sind.

**11.** Cremes nach einem der Ansprüche 1 bis 10, **dadurch gekennzeichnet, dass** der Wirkstoffgehalt (A) 5 bis 50 Gew.-%, insbesondere 20 bis 40 Gew.-% beträgt.

**12.** Verwendung von Cremes nach einem der Ansprüche 1 bis 11 zur Hydrophobierung von Baustoffen, als Bindemittel und/oder Grundiermittel in Bautenbeschichtungen und zur Hydrophobierung von feinteiligen anorganischen Baustoffen.

**Claims**

1. Hydrocarbon-free water-in-oil creams of organosilicon compounds, which comprise the components

   (A) one or more $C_1$-$C_{20}$-alkyl-$C_1$-$C_6$-alkoxysilanes (AI) and/or alkoxy-containing organopolysiloxanes (A2) and/or organopolysiloxanes (A3) which comprise, in addition to other organosiloxane units, siloxane units which bear Si-C-bonded radicals containing basic nitrogen, with the proviso that the amine number of the organopolysiloxane is at least 0.01,
   (B) one or more emulsifiers and
   (C) water.

2. Creams according to Claim 1, **characterized in that** the $C_1$-$C_{20}$-alkyl-$C_1$-$C_6$-alkoxysilanes (A1) have 1 or 2 identical or different, unsubstituted or halogen-substituted, SiC-bonded monovalent $C_1$-$C_{20}$-alkyl radicals and the other radicals are identical or different $C_1$-$C_6$-alkoxy radicals.

3. Creams according to Claim 1 or 2, **characterized in that** the $C_1$-$C_{20}$-alkyl-$C_1$-$C_6$-alkoxysilanes (A1) are present in an amount of from 5 to 100% by weight, based on the total amount of active ingredients (A).

4. Creams according to any of Claims 1 to 3, **characterized in that** the alkoxy-containing organopolysiloxanes (A2) comprise units of the formula (I)

$$R_x Si(OR^1)_y Si(OH)_z O_{\frac{4-x-y-z}{2}} \qquad (I)$$

   where

   R are identical or different monovalent, unsubstituted or halogen-substituted, SiC-bonded $C_1$-$C_{20}$-hydrocarbon radicals,
   $R^1$ are identical or different monovalent $C_1$-$C_6$-alkyl radicals,
   x is 0, 1, 2 or 3, on average from 0.8 to 1.8,
   y is 0, 1, 2 or 3, on average from 0.01 to 2.0, and
   z is 0, 1, 2 or 3, on average from 0.0 to 0.5, with the proviso that the sum of x, y and z is not more than 3.5.

5. Creams according to any of Claims 1 to 4, **characterized in that** the alkoxy-containing organopolysiloxanes (A2) are present in an amount of from 5 to 100% by weight, based on the amount of active ingredients (A).

6. Creams according to any of Claims 1 to 5, **characterized in that** the organopolysiloxanes (A3) which comprise, in addition to other organosiloxane units, siloxane units are composed of units of the formula (II)

$$R^2_a R^3_b (OR^4)_c SiO_{\frac{4-a-b-c}{2}} \qquad (II)$$

   where

   $R^2$ are identical or different monovalent, unsubstituted or halogen-substituted, SiC-bonded $C_1$-$C_{20}$-hydrocarbon radicals which are free of basic nitrogen,
   $R^3$ are identical or different monovalent, unsubstituted or halogen-substituted, SiC-bonded $C_1$-$C_{30}$-hydrocarbon radicals which contain basic nitrogen,
   $R^4$ may be identical or different and are each a hydrogen atom or a $C_1$-$C_6$-alkyl radical,
   a is 0, 1, 2 or 3,
   b is 0, 1, 2 or 3, on average at least 0.05, and
   c is 0, 1, 2 or 3,

with the proviso that the sum of a, b and c is less than or equal to 3.

7. Creams according to any of Claims 1 to 6, **characterized in that** the organopolysiloxanes (A3) which comprise, in addition to other organosiloxane units, siloxane units containing basic nitrogen are present in an amount of from 5 to 100% by weight, based on the total amount of active ingredients (A).

8. Creams according to any of Claims 1 to 7, **characterized in that** the emulsifiers (B) have an HLB of from 2 to 5.

9. Creams according to any of Claims 1 to 8, **characterized in that** the emulsifiers (B) are selected from among sorbitan esters, fatty alcohol ethoxylates, lanolin derivatives, fatty acid esters, glucose esters, emulsifiers based on polyglycerol or pentaerythritol including organosiloxanes, in particular cetyl dimethicone copolyol.

10. Creams according to any of Claims 1 to 9, **characterized in that** the emulsifiers (B) are present in an amount of from 1 to 40% by weight, in particular from 5 to 20% by weight, based on the total amount of active ingredients (A1), (A2) and/or (A3).

11. Creams according to any of Claims 1 to 10, **characterized in that** the content of active ingredients (A) is from 5 to 50% by weight, in particular from 20 to 40% by weight.

12. Use of creams according to any of Claims 1 to 11 for waterproofing building materials, as binders and/or primers in coating compositions for buildings and for hydrophobicizing finely divided inorganic building materials.

**Revendications**

1. Crèmes eau dans l'huile à base de composés organosiliciques exemptes d'hydrocarbures, qui contiennent les composants suivants :

(A) un ou plusieurs alkyles en $C_1$-$C_{20}$-alcoxy en $C_1$-$C_6$-silane(s) (A1), et/ou organopolysiloxane(s) contenant des groupes alcoxy (A2) et/ou organopolysiloxane(s) (A3), qui comportent, en plus d'autres unités d'organosiloxanes, des unités de siloxanes qui présentent des radicaux avec de l'azote basique liés par des liaisons Si-C, étant précisé que l'indice d'amine de l'organopolysiloxane est au moins de 0,01,
(B) un ou plusieurs émulsifiant(s) et
(C) de l'eau.

2. Crèmes selon la revendication 1, **caractérisées en ce que** les alkyles en $C_2$-$C_{20}$-alcoxy en $C_2$-$C_6$-silanes (A1) contiennent un ou deux radicaux alkyle en $C_1$-$C_{20}$ monovalents liés par des liaisons Si-C, le cas échéant substitués par des halogènes identiques ou différents, et les autres radicaux sont des radicaux alcoxy en $C_2$-$C_6$ identiques ou différents.

3. Crèmes selon la revendication 1 ou 2, **caractérisées en ce que** les alkyles en $C_1$-$C_{20}$-alcoxy en $C_1$-$C_6$-silanes (A1) sont contenus dans une proportion de 5 à 100% en poids, par rapport à la quantité de substance active totale (A).

4. Crèmes selon l'une quelconque des revendications 1 à 3, **caractérisées en ce que** les organopolysiloxanes contenant des groupes alcoxy (A2) sont constitués d'unités de formule générale (I)

$$R_x Si(OR^1)_y Si(OH)_z O_{\frac{4-x-y-z}{2}} \qquad (I),$$

dans laquelle :

R représente des radicaux hydrocarbonés en $C_1$-$C_{20}$ liés par des liaisons Si-C, le cas échant substitués par des halogènes, monovalents, identiques ou différents,
$R^1$ représente des radicaux alkyle en $C_1$-$C_6$ monovalents, identiques ou différents,
x a pour valeur 0, 1, 2 ou 3, en moyenne 0,8 à 1,8,

y a pour valeur 0, 1, 2 ou 3, en moyenne 0,01 à 2,0 et

z a pour valeur 0, 1, 2 ou 3, en moyenne 0,0 à 0,5, étant précisé que la somme de x, y et z a pour valeur maximum 3,5.

**5.** Crèmes selon l'une quelconque des revendications 1 à 4, **caractérisées en ce que** les organopolysiloxanes contenant des groupes alcoxy (A2) sont contenus dans une proportion de 5 à 100% en poids, par rapport à la quantité de substance active (A).

**6.** Crèmes selon l'une quelconque des revendications 1 à 5, **caractérisées en ce que** les organopolysiloxanes (A3), qui comportent, en plus d'autres unités d'organosiloxanes, des unités de siloxanes, sont constitués d'unités de formule générale (II)

$$R^2{}_a R^3{}_b (OR^4)_c SiO_{\frac{4-a-b-c}{2}} \quad (II),$$

dans laquelle

$R^2$ représente des radicaux hydrocarbonés en $C_1$-$C_{20}$ liés par des liaisons Si-C, le cas échéant substitués par des halogènes, exempts d'azote basique, monovalents, identiques ou différents,

$R^3$ représente des radicaux hydrocarbonés en $C_1$-$C_{30}$ comportant de l'azote basique, liés par des liaisons Si-C, le cas échéant substitués par des halogènes, monovalents, identiques ou différents,

$R^4$ peut être identique ou différent et représente un atome d'hydrogène ou des radicaux alkyle en $C_1$-$C_6$,

a a pour valeur 0, 1, 2 ou 3,

b a pour valeur 0, 1, 2 ou 3, en moyenne au moins 0,05 et

c a pour valeur 0, 1, 2 ou 3,

étant précisé que la somme de a, b et c est inférieure ou égale à 3.

**7.** Crèmes selon l'une quelconque des revendications 1 à 6, **caractérisées en ce que** les organopolysiloxanes (A3), qui comportent en plus d'autres unités d'organosiloxanes, des unités de siloxanes avec de l'azote basique, sont contenus dans une proportion de 5 à 100% en poids, par rapport à la quantité de substance active totale (A).

**8.** Crèmes selon l'une quelconque des revendications 1 à 7, **caractérisées en ce que** les émulsifiants (B) présentent un indice HLB de 2 à 5.

**9.** Crèmes selon l'une quelconque des revendications 1 à 8, **caractérisées en ce que** les émulsifiants (B) sont choisis parmi des esters de sorbitane, des éthoxylates d'alcools gras, des dérivés de lanoline, des esters d'acides gras, des esters de glucose, des émulsifiants à base de polyglycérol ou de pentaérythrite, y compris les organosiloxanes, en particulier le cétyl diméthicone copolyol.

**10.** Crèmes selon l'une quelconque des revendications 1 à 9, **caractérisées en ce que** les émulsifiants (B) sont contenus dans une proportion de 1 à 40% en poids, en particulier de 5 à 20% en poids, par rapport à la quantité de substance active totale (A1), (A2) et/ou (A3).

**11.** Crèmes selon l'une quelconque des revendications 1 à 10, **caractérisées en ce que** la teneur en substance active (A) est de 5 à 50% en poids, en particulier de 20 à 40% en poids.

**12.** Utilisation de crèmes selon l'une quelconque des revendications 1 à 11 pour l'hydrophobation de matériaux de construction, comme liants et/ou comme apprêts, dans les revêtements de bâtiments et pour l'hydrophobation de matériaux de construction inorganiques finement divisés.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19945305 A
- EP 0819665 B
- DE 4029640 C
- DE 3911479 A
- DE 19945305

**In der Beschreibung aufgeführte Nicht-Patentliteratur**

- **DONG HWANG et al.** *Journal of the Korean Ceramic Society,* 2000, vol. 37 (8), 760-767